# EUROPEAN PATENT SPECIFICATION

(11) **EP 1 361 144 B1**
(45) Date of publication and mention of the grant of the patent: **19.05.2010**
(21) Application number: 03006369.7
(22) Date of filing: 20.03.2003
(51) Int. Cl.: B62J 6/02, B60Q 1/00

(54) **Headlight apparatus for motorcycles**
Scheinwerfer für Motorräder
Phare pour motocyclettes

(30) Priority: 09.05.2002 JP 2002133544
(43) Date of publication of application: 12.11.2003
(73) Proprietor: HONDA GIKEN KOGYO KABUSHIKI KAISHA, Minato-ku, Tokyo (JP)
(72) Inventor: Otsubo, Mamoru, c/o K. K. Honda Gijutsu Kenkyusho, Wako-shi, Saitama (JP); Tanaka, Jun, c/o K. K. Honda Gijutsu Kenkyusho, Wako-shi, Saitama (JP); Hirose, Yoshihisa, c/o K. K. Honda Gijutsu Kenkyusho, Wako-shi, Saitama (JP)
(74) Representative: Liska, Horst

(56) References cited:
- EP-A- 1 150 063
- EP-A2- 1 264 730
- JP-A- 10 116 503
- JP-A- 10 144 103
- JP-A- 11 260 106

## Description

The present invention relates to a motorcycle having a headlight apparatus including a front-opened headlight case, a clear lens covering the front face of the headlight case, a reflector having an multi-reflector surface and being supported by the aforementioned head light case, a headlight bulb provided at the center of the reflector, and a position lamp disposed around the headlight bulb.

In the related art, such a headlight apparatus is already known, for example, in JP-A-2000-322923.

However, in such a headlight apparatus described above in the related art, a position lamp having an axis extending vertically is attached to a clear lens immediately below the headlight bulb. Therefore, in order to avoid mutual interference between the headlight bulb and the position lamp while securing a light-emitting area, it is inevitable to secure a relatively large vertical width of the headlight apparatus. In addition, since a lamp holder of the position lamp can be seen from the front of the clear lens, it is hard to say that it has a good appearance.

JP 10 144103 A on which the preamble part of claim 1 is based, JP 10 116503 A, JP 11 260106 A, EP 1 150 063 A and EP 1 264 730 A2 show a headlight only wherein the position lamp is laterally offset from the headlight bulb. None of the documents shows how the light is mounted on a vehicle, specifically on a motorcycle having a sidestand.

In JP 2000-322 923 A, JP 10 144 103 A, JP 10 116 503 A, JP 11 260 106 A and EP 1 264730 A2, the position lamp is mounted to the casing, but not to the reflector.

In EP 1 150 063 A2, a turning indicator lamp 12 is mounted to a carrier behind the reflector, and a position lamp 20 is mounted to the reflector. In these documents, the reflector and the housing are made as separate parts.

In view of such circumstances, the invention is made and it is an object of the present invention to provide a motorcycle having a headlight apparatus which equalizes the light distribution from the position lamp in both left and right sides when viewed from the front.

In order to achieve the object described above, the invention provides a headlight apparatus in accordance with claim 1.

In this arrangement, by disposing the position lamp offset leftward or rightward with respect to the headlight bulb, the headlight bulb and the position lamp do not interfere with each other even when the vertical width of the headlight apparatus is set to a relatively small value, which contributes to downsizing of the headlight apparatus in the vertical direction while securing the light-emitting area. In addition, since the position lamp is mounted to the reflector with the axis thereof oriented substantially parallel with the axis of the headlight bulb, it is advantageous in terms of the light-emitting area, and furthermore, the appearance may be improved because the lamp holder of the position lamp cannot be seen easily from the front of the clear lens.

The aforementioned position lamp is mounted to the aforementioned reflector so as to offset from the aforementioned headlight bulb in the direction opposite from the side where a sidestand is disposed. In this arrangement, since the vehicle body inclines toward the sidestand when the motorcycle is stopped with the sidestand extended, the position of the position lamp is displaced toward the widthwise center of the vehicle body in the inclined state, and thus the light distribution from the position lamp is equalized on both left and right sides when viewed from the front.

Referring now to attached drawings, a mode for carrying out the present invention will be described based on an embodiment.
Fig. 1 is a side view of a motorcycle.
Fig. 2 an enlarged front view when viewed in the direction indicated by an is arrow 2 in Fig. 1.
Fig. 3 is a front view of a headlight apparatus.
Fig. 4 is a plan view when viewed in the direction indicated by an arrow 4 in Fig. 3.
Fig. 5 is a cross sectional view taken along the line 5-5 in Fig. 3.

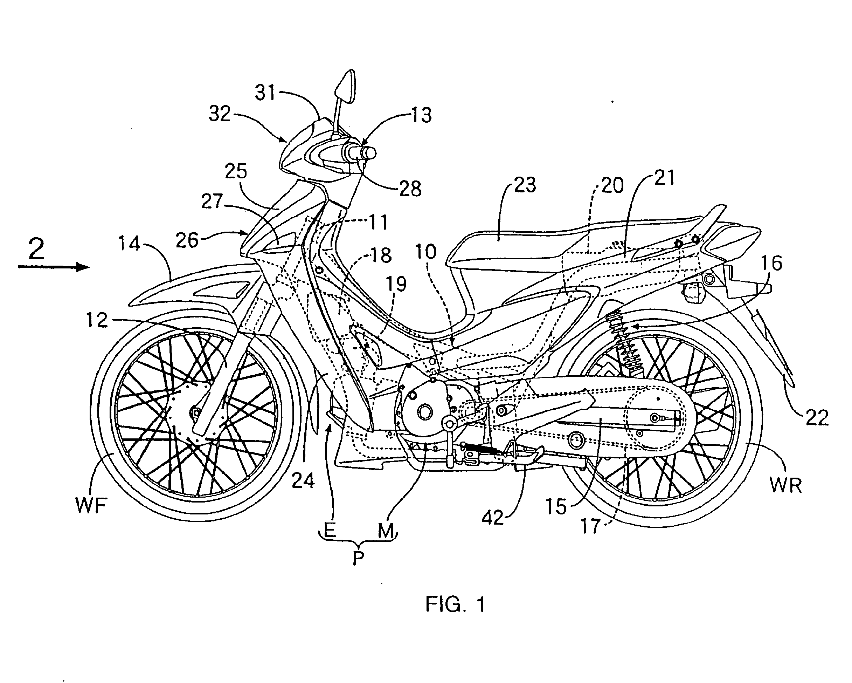

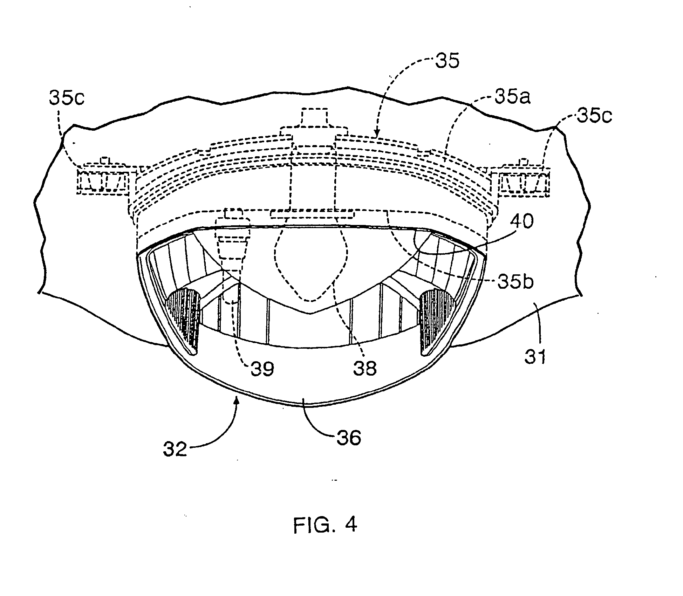

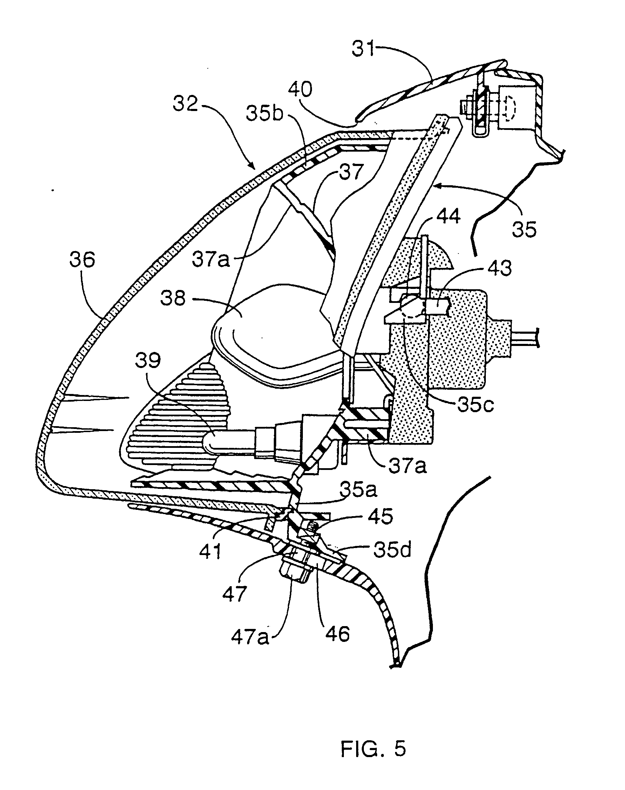

Fig. 1 to Fig. 5 show an embodiment of the present invention.

In Fig. 1, a head pipe 11 provided at the front end of a vehicle body frame 10 of a motorcycle steerably supports a front fork 12, which supports a front wheel WF. A bar handle 13 is connected to the upper end of the front fork 12, and a front fender 14 covering the upper portion of the front wheel WF is supported by the front fork 12.

A rear fork 15 for rotatably supporting a rear wheel WR is supported at the midsection of the vehicle body frame 10, and a rear cushion 16 is provided between the rear portion of the vehicle body frame 10 and the rear fork 15.

A power unit P including an engine E and a transmission M is supported at the midsection of the vehicle body frame 10, and outputs from the aforementioned transmission M are transmitted to the rear wheel WR via a chain 17.

An air cleaner 18 and a carburetor 19 disposed between the air cleaner 18 and the engine E are disposed above the engine E, and a fuel tank 20 disposed above the rear wheel WR is supported by the vehicle body frame 10.

The rear portion of the vehicle body frame 10 and the fuel tank 20 are covered with a rear vehicle body cover 21 formed of synthetic resin, which is mounted on the vehicle body frame 10, and a rear fender 22 for covering the upward of the rear portion of the rear wheel WR is connected to the rear vehicle body cover 21. A pillion seat 23 is provided on the rear vehicle body cover 21, so that a driver can sit on the front half of the pillion seat 23.

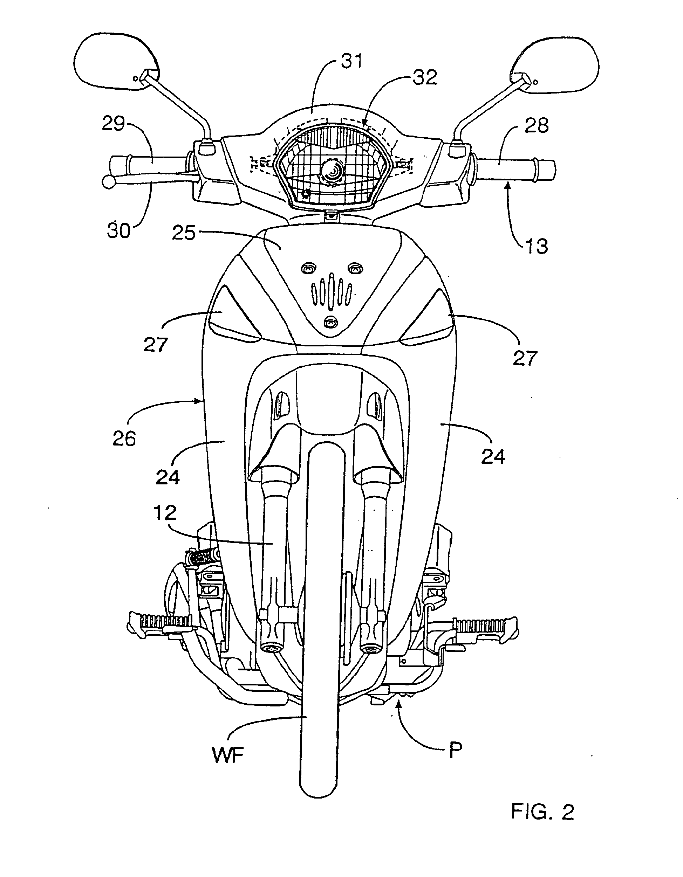

Referring also to Fig. 2, a front portion of the aforementioned vehicle body frame 10, the engine E, the carburetor 19, and the air cleaner 18 are covered with a front vehicle body cover 26 having a pair of left and right leg shields 24 and 24, and a front top cover 25 connecting the upper portions of the both leg shields 24 and 24, and the like. In addition, front turn signals 27 and 27 are disposed at the midsection in the vertical direction of the both leg shields 24... respectively.

Grips 28 and 29 are disposed on the left and right ends of the bar handle 13, and a brake lever 30, which can be operated by a hand holding the grip 29, is disposed at the right end of the bar handle 13. The bar handle 13 is covered with a handle cover 31 in such a manner that the aforementioned grips 28 and 29 and the brake lever 30 are projected from both sides thereof, and a headlight apparatus 32 according to the present invention is disposed at the center of the handle cover 31.

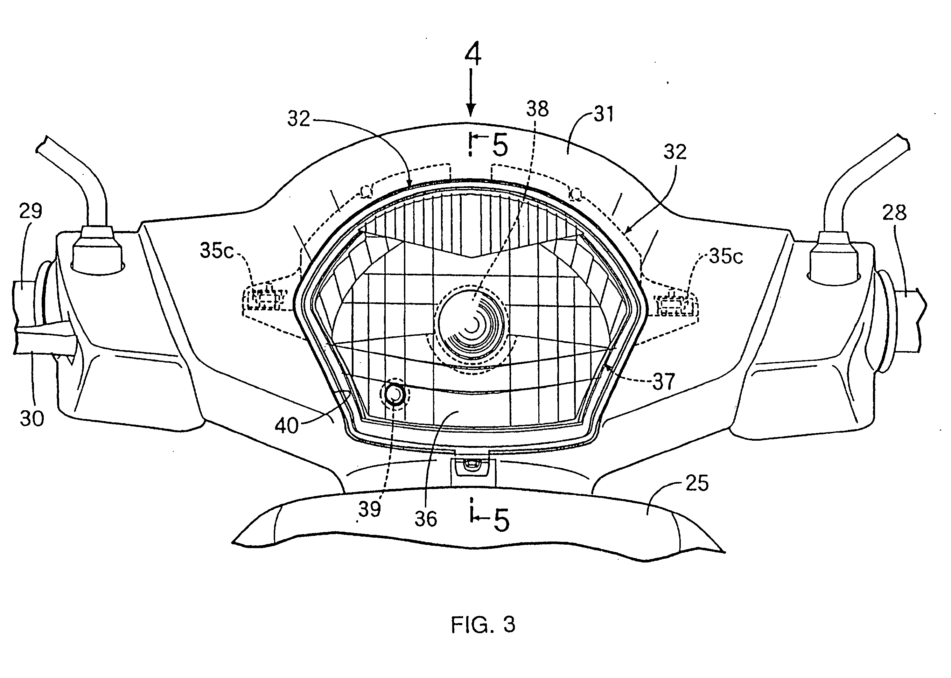

Referring also to Fig. 3 to Fig. 5, the headlight apparatus 32 includes a headlight case 35 formed of synthetic resin, a clear lens 36 of synthetic resin for covering the front face of the headlight case 35, a reflector 37 having a multi-reflector surface 37a and being supported by the headlight case 35, a headlight bulb 38 disposed at the center of the reflector 37, and a position lamp 39 attached to the aforementioned reflector 37 so as to be disposed around the aforementioned headlight bulb 38.

An opening 40 is formed at the center of the front portion of the handle cover 31, and the headlight apparatus 32 is disposed at the center of the handle cover 31 in such a manner that the aforementioned clear lens 36 is exposed through the opening 40.

The clear lens 36 is formed into a forwardly bulging shape so as to project from the aforementioned opening 40 toward the front. The headlight case 35 integrally includes a holding plate portion 35a endlessly continuing opposing to the entire periphery of the rear end of the clear lens 36, and a front extension 35b extending forward from the inner periphery of the aforementioned supporting plate portion 35a so as to oppose closely to the outer periphery except for the lower portion of the clear lens 36 from the inside, and is formed of synthetic resin. The rear end of the clear lens 36 is mounted on the aforementioned supporting plate portion 35a with a sealing material 41 interposed therebetween.

The reflector 37 is formed into a forwardly opened bowl shape and integrally connected to a front extension 35b of the aforementioned headlight case 35. In other words, the reflector 37 and the headlight case 35 are formed integrally of synthetic resin.

A cylindrical portion 37a projecting rearward is integrally formed at the center of the reflector 37, and the headlight bulb 38 is detachably attached to the aforementioned cylindrical portion 37a from the behind so as to be positioned at the center of the reflector 37.

The position lamp 39 is attached to the reflector 37 at the position offset leftward or rightward with respect to the headlight bulb 38, in this embodiment, at the position offset from the headlight bulb 38 in the direction opposite from the side where a sidestand 42 (See Fig. 1) is disposed. In other words, since the sidestand 42 is disposed on the left side of the vehicle body when viewed toward the direction of travel of the motorcycle in this embodiment, the aforementioned position lamp 39 is disposed at the lower right of the headlight bulb 38 so as to offset toward the right from the headlight bulb 38 when viewed in the direction of travel of the motorcycle.

In addition, the position lamp 39 is attached to the reflector 37 with the axis thereof oriented substantially parallel with the axis of the headlight bulb 38.

The reflector 37 and the headlight case 35 are supported by the handle cover 31 so as to be capable of swinging in the vertical directions for adjusting the optical axis, and supporting portions 35c and 35c integrally formed on the left and right sides of the headlight case 35 are swingably supported by the spherical portions 44... at the front ends of shafts 43... fixed to the bar handle 13.

Therefore, since the reflector 37 does not swing with respect to the headlight case 35 as in the case of four-wheel vehicles, the position lamp 39 can be mounted directly to the reflector 37, and it is not necessary to form a relatively large opening on the reflector 37 for mounting the position lamp 39, whereby sacrifice of the light-emitting area of the reflector 37 may be reduced.

On the other hand, the headlight case 35 is integrally formed at the lower portion thereof with an operating arm 35d facing toward the inner surface of the handle cover 31 below the opening 40, and a nut 45 is connected to the operating arm 35d by molding. The handle cover 31 is formed with an elongated hole 46, which is relatively long in the fore-and-aft direction, at the position corresponding to the aforementioned operating arm 35d, and a bolt 47 having an enlarged head 47a to be engaged with the lower surface of the handle cover 31 and being inserted into the elongated hole 46 is screwed into the aforementioned nut 45. Therefore, by moving the bolt 47 in the elongated hole 46 in the fore-and-aft direction, the reflector 37 and the headlight case 35 swings in the vertical direction, and the position of the reflector 37 and the headlight case 35, that is, the optical axis of the head light apparatus 32 is fixed by fastening the bolt 47.

The operation of the present embodiment will now be described. In the headlight apparatus 32, since the position lamp 39 is disposed at the position offset leftward or rightward with respect to the headlight bulb 38, the headlight bulb 38 and the position lamp 39 do not interfere with each other even when the vertical width of the headlight apparatus 32 is set to a relatively small value, which contributes to downsizing of the headlight apparatus 32 in the vertical direction while securing the light-emitting area.

Since the position lamp 39 is adapted to be mounted to the reflector 37 with the axis thereof oriented substantially parallel to the axis of the headlight bulb 38, the appearance may be improved without reducing the light-emitting area because the lamp holder of the position lamp 39 cannot be seen easily from the front of the clear lens 36.

In addition, in the present embodiment, the position lamp 39 is mounted to the reflector 37 so as to be offset from the headlight bulb 38 in the direction opposite from the side where the sidestand 42 is disposed. Therefore, when the vehicle body is inclined toward the sidestand 42 when the motorcycle is stopped with the sidestand 42 extended, the position of the position lamp 39 is displaced toward the widthwise center of the vehicle body in the inclined state, and thus the light distribution from the position lamp 39 is equalized on both left and right sides when viewed from the front.

The invention enables reduction of the vertical width while improving the appearance in a headlight apparatus for a motorcycle including a front-opened headlight case, a clear lens for covering the front face of the headlight case, a reflector having a multi-reflector surface and being supported by the aforementioned headlight case, a headlight bulb provided at the center of the reflector, and a position lamp disposed around the headlight bulb.

In the invention, a position lamp 39 to be disposed at the position offset leftward or rightward with respect to a headlight bulb 38 is mounted to a reflector 37 with the axis thereof substantially parallel with the axis of the headlight bulb 38.

## Claims

1. A headlight apparatus for a motorcycle comprising: a front-opened headlight case (35); a clear lens (36) for covering the front face of the headlight case (35); a reflector (37) having a multi-reflector surface (37a) and being supported by said headlight case (35); a headlight bulb (38) provided at the center of the reflector (37); and a position lamp (39) disposed around the headlight bulb (38) at the position offset leftward or rightward with respect to said headlight bulb (38) with the axis thereof oriented substantially parallel with the axis of said headlight bulb (38),
**characterized in that**
said position lamp (39) is mounted to said reflector (37) and that the reflector (37) is integrally formed to a front extension (35b) of the headlight case (35).

2. A motorcycle comprising a headlight apparatus according to Claim 1,
**characterized in that** said position lamp (39) is mounted to said reflector (37) so as to offset from said headlight bulb (38) in the direction opposite from the side where a sidestand (42) is disposed.

## Patentansprüche

1. Scheinwerfervorrichtung für ein Kraftrad, umfassend: ein vorne offenes Scheinwerfergehäuse (35); ein klares Lampenglas (36), um die vordere Fläche des Scheinwerfergehäuses (35) abzudecken; einen Reflektor (37), welcher eine Mehrfach-Reflektor-Oberfläche (37a) aufweist und durch das Scheinwerfergehäuse (35) gelagert ist; eine Scheinwerferglühlampe (38), welche in der Mitte des Reflektors (37) vorgesehen ist; und eine Positionslampe (39), welche um die Scheinwerferglühlampe (38) herum an der Position angeordnet ist, welche bezüglich der Scheinwerferglühlampe (38) nach links oder rechts versetzt ist, wobei ihre Achse im Wesentlichen parallel zu der Achse der Scheinwerferglühlampe (38) ausgerichtet ist,
**dadurch gekennzeichnet,**
**dass** die Positionslampe (39) an dem Reflektor (37) angebracht ist, und dass der Reflektor (37) integral an einer Frontverlängerung (35b) des Scheinwerfergehäuses (35) ausgebildet ist.

2. Kraftrad umfassend eine Scheinwerfervorrichtung nach Anspruch 1,
**dadurch gekennzeichnet, dass** die Positionslampe (39) derart an dem Reflektor (37) angebracht ist, dass sie von der Scheinwerferglühlampe (38) in der Richtung versetzt ist, welche zu der Seite entgegengesetzt ist, wo ein Seitenständer (42) angeordnet ist.

## Revendications

1. Appareil formant phare pour un motocycle comprenant : un boîtier de phare ouvert à l'avant (35) ; une lentille transparente (36) pour recouvrir la face avant du boîtier de phare (35) ; un réflecteur (37) ayant une surface à plusieurs réflecteurs (37a) et étant supporté par ledit boîtier de phare (35) ; une ampoule de phare (38) prévue au centre du réflecteur (37) ; et une lampe de position (39) disposée autour de l'ampoule de phare (38) à une position décalée vers la gauche ou vers la droite par rapport à ladite ampoule de phare (38) avec son axe orienté de manière sensiblement parallèle à l'axe de ladite ampoule de phare (38),
**caractérisé en ce que** :
ladite lampe de position (39) est montée sur ledit réflecteur (37), et
**en ce que** le réflecteur (37) est formé d'une seule pièce avec une extension avant (35b) du boîtier de phare (35).

2. Motocycle comprenant un appareil formant phare selon la revendication 1, **caractérisé en ce que** ladite lampe de position (39) est montée sur ledit réflecteur (37) afin de se décaler par rapport à ladite ampoule de phare (38) dans la direction opposée au côté où une béquille latérale (42) est disposée.
